# EUROPEAN PATENT SPECIFICATION

(11) **EP 0 308 512 B1**
(45) Date of publication and mention of the grant of the patent: **22.06.1994**
(21) Application number: 88902201.8
(22) Date of filing: 24.02.1988
(51) Int. Cl.: B23K 26/00

(54) **APPARATUS FOR DULL FINISH OF ROLL WITH PULSE LASER**
GERÄT ZUR MATTVEREDELUNG EINER ROLLE MITTELS IMPULSLASER
APPAREIL POUR LE MATAGE DE ROULEAUX PAR UN FAISCEAU LASER A IMPULSIONS

(30) Priority: 24.02.1987 JP 40777/87; 24.02.1987 JP 40778/87; 14.03.1987 JP 59860/87; 11.12.1987 JP 313620/87; 03.02.1988 JP 22038/88
(43) Date of publication of application: 29.03.1989
(73) Proprietor: NIPPON STEEL CORPORATION, Tokyo 100 (JP)
(72) Inventor: MINAMIDA, Katsuhiro Nippon Steel Corporation, Sagamihara-shi Kanagawa 229 (JP); SUEHIRO, Junya Nippon Steel Corporation R&D, Sagamihara-shi Kanagawa 229 (JP)
(74) Representative: Cookson, Barbara Elizabeth
(86) International application number: PCT/JP88/00194
(87) International publication number: WO 88/06504

(56) References cited:
- JP-A- 5 879 788

## Description

The present invention relates to apparatus for dulling a surface of an article such as a roll by a laser beam and, in particular, ensuring appropriate conditions for such dulling by controlling a pulse waveform of a Q-switched laser beam.

The methods of dulling a roll include, among others, shot-blasting electric discharge machining, and working the roll surface by a laser.

JP-B-58-25557 and JP-B-60-2156 disclose apparatus for dulling the surface of a roll with a pulsed laser beam projected from a laser source of a YAG laser, ruby laser, or the like by Q-switching, and are characterized by providing a laser beam splitter which irradiates the surface of a rotating roll (JP-B-58-25557) and controls a number of laser beam pulses emitted from the laser beam splitter in accordance with a dulling shape (JP-B-60-2156).

In particular, JP-B-60-2156 discloses apparatus which produces a pulsed laser beam by Q-switching of a continuous-wave laser beam and this apparatus includes a Q-switch control system with a pulse oscillator for determining pulse repetition and the output power of a radio-frequency signal source.

To dull the roll surface, the roll surface must be worked periodically with a pulse laser having a predetermined repetition rate, pulse width and peak value.

Such a pulse laser output can be provided by pulsing a continuous-wave (CW) laser output using a mechanical optical apparatus (chopper, shutter, etc.) as shown in Figure 2, or by using a pulse laser or Q-switched laser beam (as shown in Figure 3). JP-A-58-79788 describes one method of driving a Q-switched laser unit for use in precision machining and other fields.

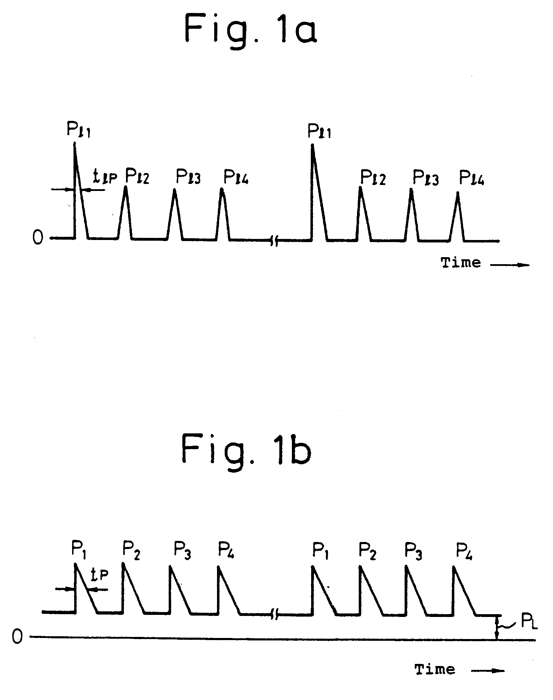

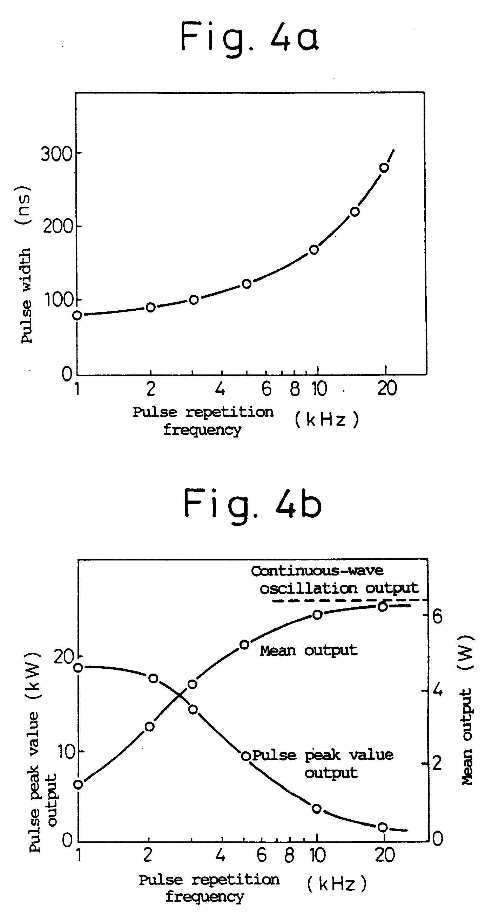

In the Q-switched pulse laser, since a mechanical device is not required, the equipment can be made compact and simple and the pulse repetition rate can be easily controlled over a wide range, in comparison with other methods. But, when the frequency is changed by the Q-switching, as shown in Figure 4a and Figure 4b, since the oscillation and excitation conditions vary, the pulse waveform and peak value output are also varied at the same time, and thus a stable dulling cannot be obtained. Also, the peak value (Pℓ₁) of the leading pulse is very much larger than those of the subsequent pulses (Pℓ₂ , Pℓ₃ , Pℓ₄ , ---), as shown in Figure 1a.

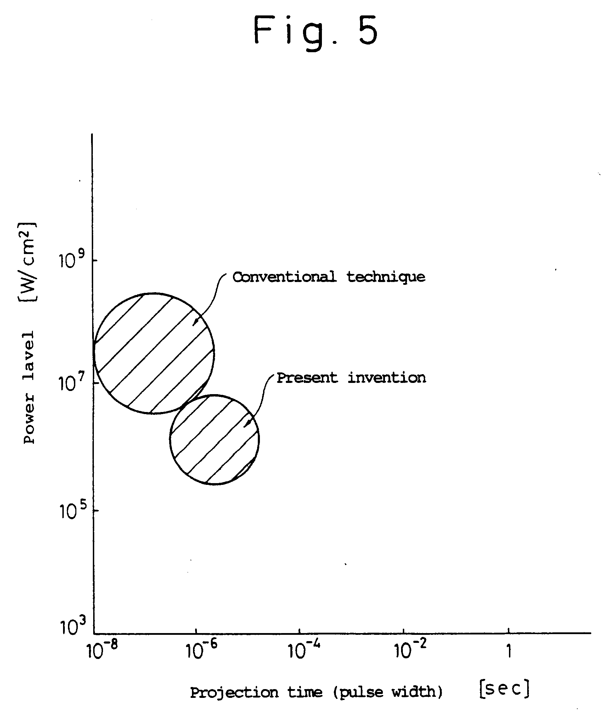

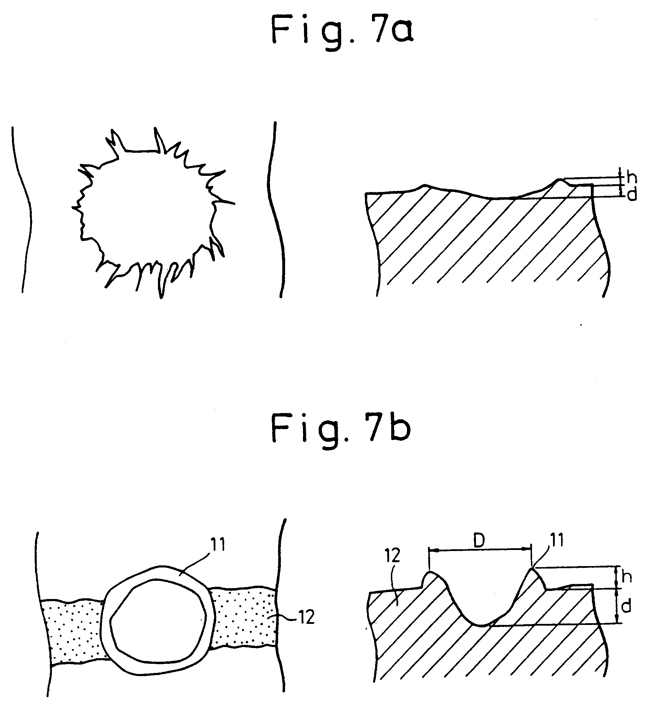

Furthermore, the conventional Q-switched pulse laser beam generally has a fault in that an average pulse peak value ( $\overline{{\text{Pℓ}}_{\text{p}}} \text{= (Pℓ₁ + Pℓ₂ + Pℓ₃ + Pℓ₄)/4}$ ) is 10⁵ - 10³ Watts (W) and a half-power width (tp) is less than 1 micro second conversion of the pulse peak value into power strength (W/cm²) as shown in Fig. 5 , and the working (crater formation) domain is not suitable for dulling. Namely, working parts are evaporated, and therefore, a crater-shaped hole cannot be formed as shown in Fig. 7(a) (height h or depth d of the uneven surface is less than 1 »m).

JP-B-58-25557 and JP-B- 60-2156 mentioned above do not disclose a solution to the above problems of the conventional techniques. The dulling of a roll surface of a rolling mill is disclosed in other published documents, e.g., JP-B-61-28436 and US-A-4329562.

JP-B-61-28436 discloses a process in which two luminous fluxes are intermittently focused a lens through a circular rotating plate having a transmission zone and a reflection zone, onto the roll surface, and US-A-4329562 discloses a process by which a specific motif or motif patterns are formed on the roll surface of the rolling mill.

The above publications do not disclose a solution to the problems of a Q-swtiched pulsed laser.

These problems are solved according to the present intention by the apparatus defined in the claims below. Thus, the invention enables a crater of a desired shape to be formed efficiently on the roll surface by controlling the nonuniformity, the pulse peak value, and the half-width value of the pulse waveform of a Q-switched pulse laser, which are the problems of the conventional techniques as mentioned above, to the respective domains thereof suitable for dulling a roll, and increases the efficiency of the control of not only a single pulse but also a pulse group.

The invention will be further described with reference to the accompanying diagrammatic drawings.

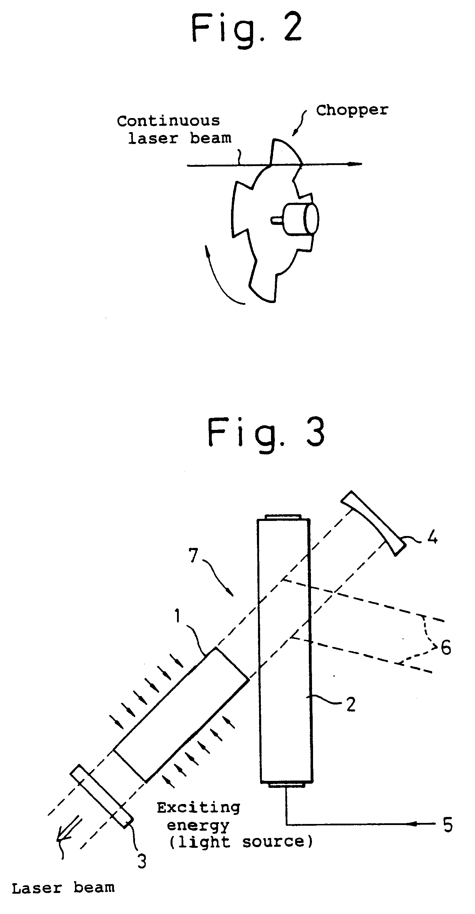

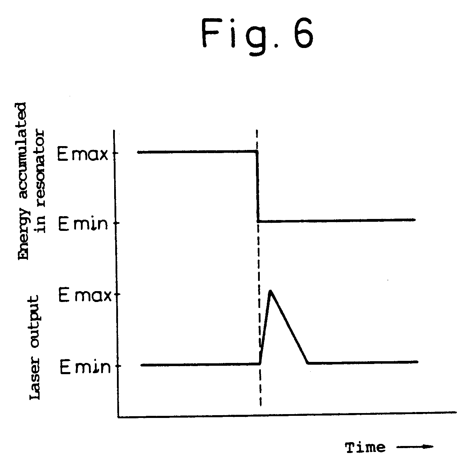

First, the mechanism of generating the Q-switched pulse laser beam is described as follows, with reference to Figure 3. Namely, a desired excitation energy (light source) is continuously applied to a laser rod 1 arranged between reflecting mirror 3 and 4, and when a Q-switched element 2 composed of a fused quartz, an absorber, and an acousto-optic modulator and disposed between the laser rod 1 and the reflecting mirror 4 at a predetermined angle to a laser optical resonating axis, is supplied with a high frequency signal (this signal is modulated by an RF output modulated signal) from a radio frequency signal source (RF) 5, a diffraction grating is formed inside the fused quarty to generate a diffracted light 6. As a result, the loss inside the resonator 7 is increased and the energy is accumulated in the laser rod 1. Then, when the RF signal applied to the Q-switched element is turned off by an RF output modulated signal, the diffraction grating in the fused quartz is extinguished and the diffraction light 6 eliminated, and the loss in the resonator 7 is decreased. As a result, the energy accumulated in the laser rod 1 is instantaneously radiated to provide a laser pulse having a high pulse peak value. Namely, as shown in Figure 6, the energy at a level Eₘₐₓ is accumulated in the laser rod 1, and when this energy is instantaneously discharged to a level Eₘᵢₙ (≃ 0 W), the laser output forms a laser pulse having a high pulse peak value of from Pₘᵢₙ to Pₘₐₓ.

Using the concept that the pulse peak value and half width, etc., of the subsequent pulse can be controlled by controlling the accumulation of energy (Eₘₐₓ) of the laser rod 1, the inventors of the present invention effected the following methods:
(1) A method of reducing the pumping energy (light source) which pumped the laser rod 1;
   This method is the simplest, but it was found that, where a plurality of pulses is generated in the grouping as shown in Figure 1a, the pumping energy is decreased and the subsequent pulses P₂ to P₄ are eliminated, and thus the number of pulses necessary for working cannot be provided.
(2) A method of inhibiting the accumulation of excessive energy in the laser rod 1 by reducing the loss in the resonator while the pulse is turned off:
   This method reduces the value of Eₘₐₓ - Eₘᵢₙ (≃ 0 W) in Fig. 6, i.e., decreases the Eₘₐₓ value, and can be effected in three ways:
   (2)-1: Changing the installation angle and position of the Q-switching element 2.
   (2)-2: Making the pumping energy sent to the laser rod 1 higher than the upper limit of transmission blocking of the Q-switched element 2.
   (2)-3: Lowering the RF power applied to the Q-switched element 2.

It was found from the results of the inventor's experiments that, in any of the above three ways, a constant continuous output P shown in Fig. 1b is generated, the ratio of a leakage output P_{L} to the total output P_{T} can be adjusted by any of these methods, the first pulse P₁ has a reduced pulse peak value (P₁ < Pℓ₁), the pulse peak value P₁ to Pᵢ of the pulses in the same group can be adjusted to a same level correspondingly, and that the pulse half width tₚ is increased (tₚ > tℓₚ).

The method (2)-1 requires an advanced technique for adjustment of the angle and position of the Q-switching element, the method (2)-2 is not advantageous in that the energy consumption is large, and the method (2)-3 is the simplest and most desirable.

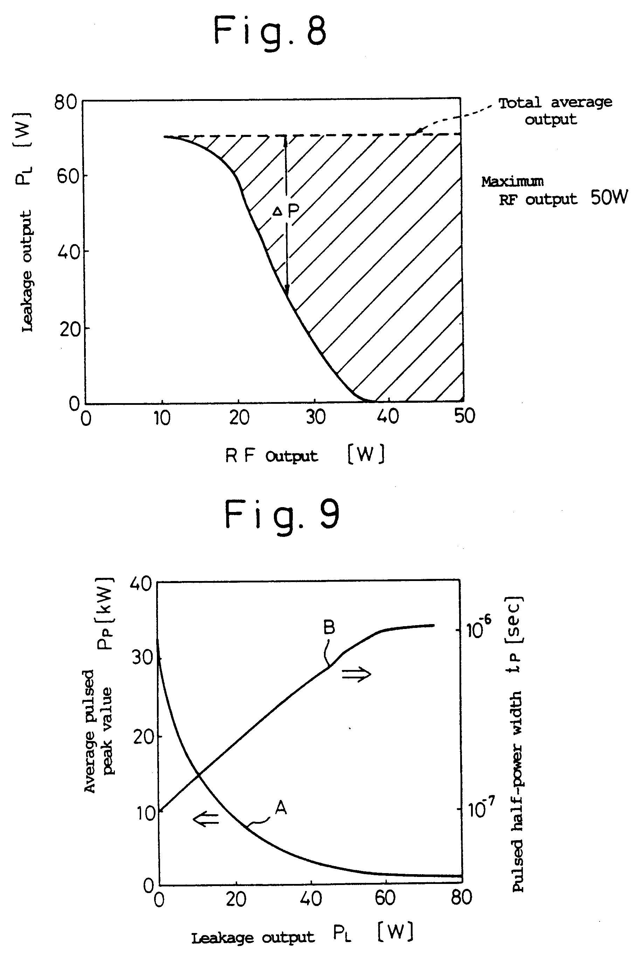

Namely, when the RF output applied to the Q-switched element 2 is reduced, the ratio of the leakage output P_{L} to the total output P_{T} in the laser rod 1 is increased. Figure 8 shows the above and indicates the correction between the RF output and the leakage output when the total average output P_{T} is 70 [W] and the maximum RF output is 50 [W]. It is proven that, when the RF output is less than 40 [W] the leakage output increases rapidly. Also, the pulse peak value Pₚ can be reduced by increasing the leakage output P_{L} , in accordance with the difference between P_{T} and P_{L} , i.e., ΔP ( ${\text{ΔP = P}}_{\text{T}} {\text{- P}}_{\text{L}}$ as shown in Fig. 8), which contributes to the pulse peak value Pₚ. Figure 9 shows the above and indicates the correction between the leakage output P_{L} and the average pulse peak value $\overline{{\text{P}}_{\text{p}}}$ and the pulse half width tₚ. It is proven that, when the leakage output P_{L} is increased, the average pulse peak value P̅ₚ̅ is reduced as shown by curve A and the pulse half width is increased as shown by curve B.

Namely, in accordance with this invention, the leakage output is increased, and therefore, the average pulse peak value is reduced and the first pulse peak value is reduced and thus the first pulse peak value can be maintained at a same level as another pulse peak value in a group. Moreover, the pulse half width can be increased, and therefore, when the roll surface is dulled by this invention, desired craters can be formed. Figure 7(b) shows the above craters, and thermally-affected zones 12 caused by the leakage output formed on the roll surface. The concavity of the craters can impart a desired roughness to the surface of a rolled steel plates, and since the thermally-affected zones 12 have no irregularities, the rolling of a steel plate can be effected without an adverse affect thereon.

### BRIEF DESCRIPTION OF THE DRAWINGS

Figures 1a and 1b show pulse wave forms for a comparison of the Q-switched pulsed waveform generated by conventional apparatus and by apparatus of the present invention;
Figure 2 is a perspective view of a chopper for pulsing a continuous-wave laser beam;
Figure 3 is a block diagram showing the construction of a solid state laser oscillator using a Q-switched element;
Figures 4a and 4b are graphs indicating the relationship between the frequency and pulse waveform of the Q-switched pulse;
Figure 5 is a graph indicating the relationship between the laser projecting conditions and working phenomenon;
Figure 6 shows a pulse waveform indicating the mechanism which produces the Q-switched pulse waveform;
Figures 7a and 7b show sectional and plan views of a roll surface worked by conventional apparatus and by apparatus of the present invention;
Figure 8 is a view indicating the correlation between the RF output and the leakage output;
Figure 9 is a view indicating the correlation between the leakage output and the average pulse peak value and the pulse half-power width;
Figure 10 is an explanatory view of a pulsed laser beam oscillator of the present invention;
Figure 11 is a block diagram showing apparatus for roll-dulling by a pulsed laser beam, according to a first embodiment of the present invention;
Figure 12 is a pulse waveform diagram showing the output state of a pulse group generated by apparatus of the present invention;
Figure 13 is a block diagram showing a control circuit for the Q-switching control system;
Figure 14 is a functional time chart showing the relationship among the control signals;
Figure 15 is a block diagram showing the construction of pulsed laser apparatus according to a second embodiment of the present invention;
Figure 16 is a side view showing the state of a focused beam.
Figure 17 is a functional time chart showing the relationship among the control signals;
Figure 18a is a time chart of the generation of a single pulse laser, whereas Figures 18b and 18c are time charts, respectively, of the generation of combined pulse laser;
Figure 19 is a plan view, on an enlarged scale, of a roll surface worked by pulsed laser apparatus according to the present invention;
Figure 20 are explanatory plan and sectional views of the worked roll surface;
Figures 21a and 21b are block diagrams showing the construction of roll-dulling apparatus according to a third embodiment of the present invention;
Figure 22a is a view showing beam combination by a beam splitter, and Figure 22b is an explanatory view showing beam combination by a total reflecting mirror.

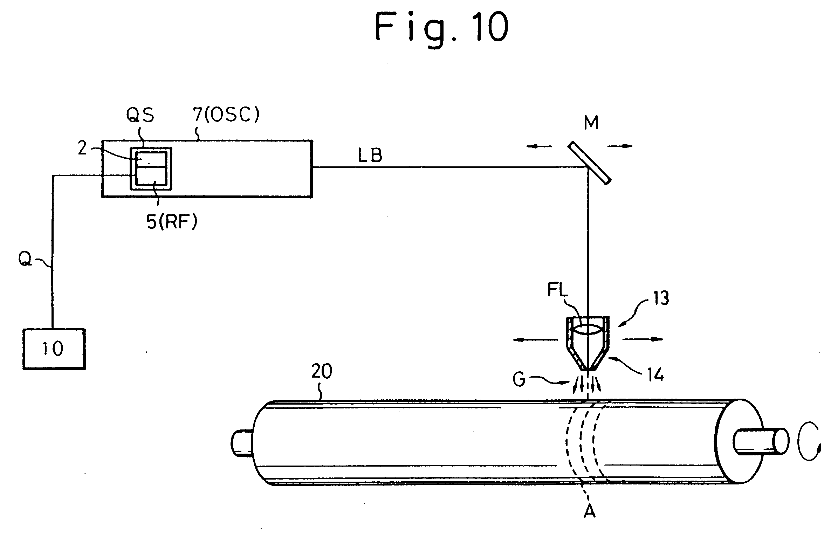

With reference to Figure 10 by way of initial explanation, a pulsed laser beam oscillator (OSC) 7 of the roll-dulling apparatus of the present invention comprises a YAG laser oscillator having an average output of over 100 [W] and can oscillate a Q-switched pulsed laser beam LB having a frequency of 1-40 kHz. The laser beam LB is made incident onto the roll surface by a plurality of bending mirrors M (only one mirror shown in the drawing) and a focusing lens FL. A laser beam incident head 13 is moved roll-axially by a drive mechanism (not shown). A nozzle 14 is set at a top of the laser beam incident head to emit a gas, e.g., nitrogen, oxygen or argon gas, supplied from a gas supply source (not shown).

The Q-switch QS comprises the Q switching element 2 and the radio frequency signal source (RF) 5.

Reference numeral 10 indicates a controlling system comprised of a circuit which generates the RF output modulated signal Q.

The manner in which the surface of a roll 20 is worked by the apparatus of the invention will be described herebelow.

The pulsed laser beam LB generated by the oscillator, as described herebelow, is made incident on the surface of the roll 20, which is rotating at a constant speed.

The signal Q generated from the controlling system 10 is input to the radio frequency signal source RF 5, and the signal is modulated to a desired waveform at the signal source 5 and applied to the Q-switching element 2, where the RF output is controlled (lowered) and the pulse waveform shown in Figure 1b, for example, is generated. The pulsed laser beam LB generated in accordance with the above pulse waveform is made incident on the roll surface.

By controlling the RF input, the most suitable pulsed laser beam for dulling can be irradiated and a crater-shape type motif A can be formed. When the pulsed laser beam incident head 13 is moved at a constant speed by a drive mechanism, the above mentioned pulsed laser beam is irradiated, and the motif A can be formed on the surface of the roll 20 at regular intervals and as a constant pattern.

Next, the characteristics of Q-switched pulse of the YAG laser in accordance with the present invention and prior art will be compared in Table 1.

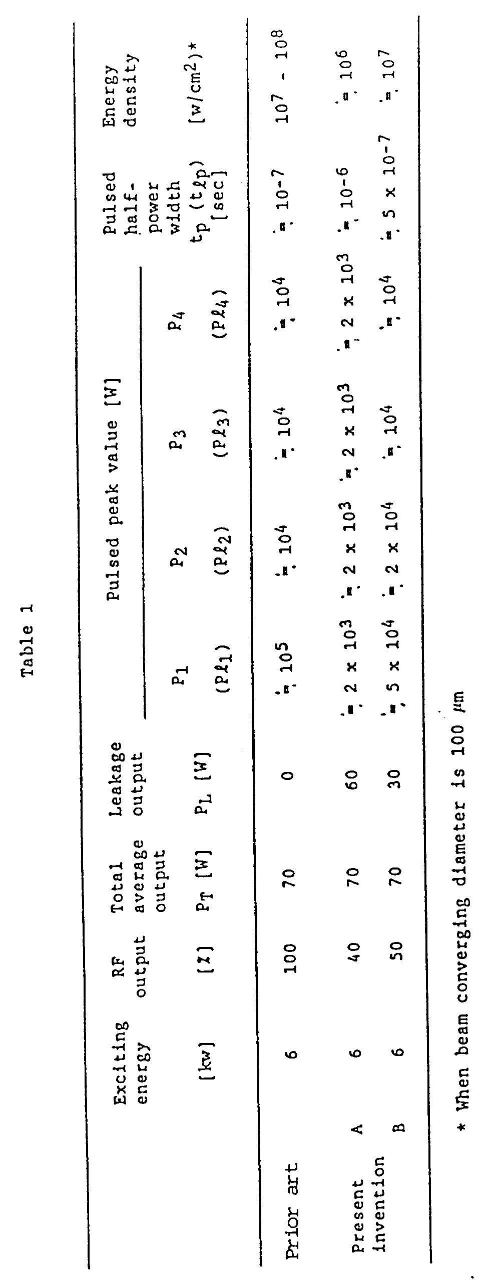

In the present invention A, when RF output was supplied to the Q-switch at a value 40% less than the conventional technique value, the leakage output became 60 W, the total average output became 70 W, and the output was used to form a pulse of only 10 W, as shown in the above table, and an ideal laser pulse was formed for dulling.

As a result, craters were formed, having a height of the concavity h of 2 to 3 »m, a depth d of 5 to 10 »m, and a diameter D of 100 to 200 »m, as shown in Figure 7b.

Also, in the present invention B, when the RF output was supplied to the Q-switch at a value 50% less than the conventional technique value, the leakage output became 30 W and an output of 40 W was used to form the pulse.

Conventionally, in the case A, the output used to form the pulse was 30% higher, the melt evaporation was increased, the unevenness of the craters was decreased, in that h was 1 to 2 »m, d was 2 to 6 »m, and D was 100 to 200 »m.

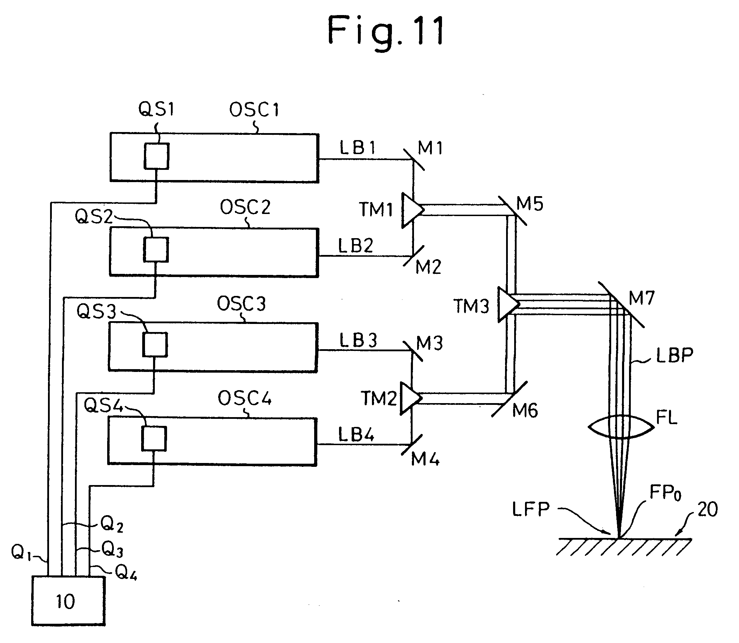

A first embodiment of apparatus according to the invention, for roll-dulling by a pulsed laser beam, will now be described in detail with reference to Figure 11, in which a group of laser beams is formed by oscillating a plurality of Q-switched laser beams produced by a Q-switched control system.

Figure 11 shows the basic construction of a pulsed laser beam controller according to the present invention, in which four pulses are used. OSC1 to OSC4 indicate laser oscillators, and OS1 to OS4 indicate Q-switches containing the high frequency signal sources RF and corresponding to the oscillators OSC1 to OSC4. Reference number 10 indicates a control system for the Q-switches, from which Q-switched signals Q₁ to Q₄ are output. Laser beams LB1 to LB4 are generated by the oscillators OSC1 to OSC4 and combined into a group LBP of parallel laser beams by bending mirrors M1 to M7 and combining mirrors TM1 to TM3. The laser beam group LBP is focused by a focusing lens FL into a focused laser beam group LFP at a focal point FP₀ in such a manner that a single beam is formed. Reference numeral 20 indicates the surface of a roll to be worked. Although four laser beams are shown in Figure 11, the number of laser beams is not limited thereto, since when the number of laser beam is increased, the depth of a hole is almost linearly increased, and thus the number of laser beams is selected according to the quality of the roll surface roughness to be dulled.

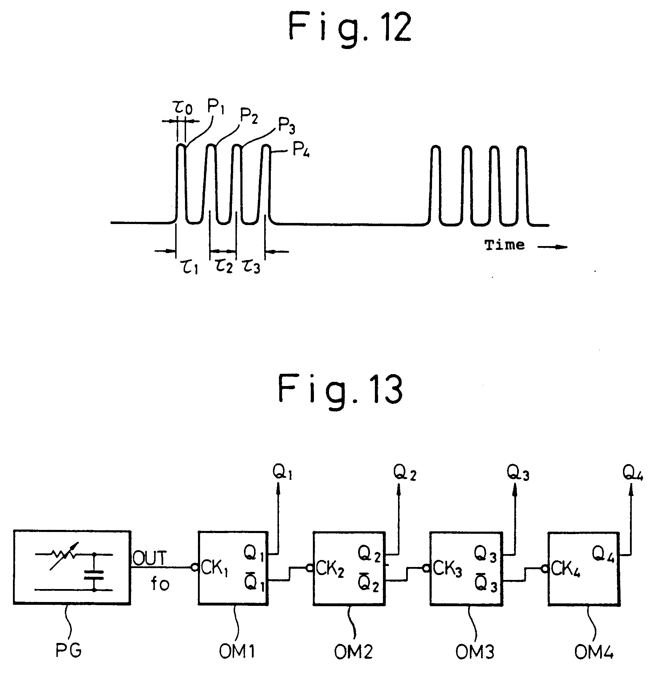

Figure 12 shows the ideal pulse waveform for dulling the roll surface. The symbol τ₀ indicates the width of each laser pulse, τ₁ indicates the interval between the first pulse PL₁ and second pulse PL₂ , and τ₂ indicates the interval between the second pulse PL₂ and third pulse PL₃. As shown in Figure 12, the ideal pulse waveform suitable for roll dulling is such that

${\text{PL₁ = PL₂ = --- = PL}}_{\text{n}} {\text{and τ₁ = τ₂ = --- = τ}}_{\text{n-1}} \text{.}$

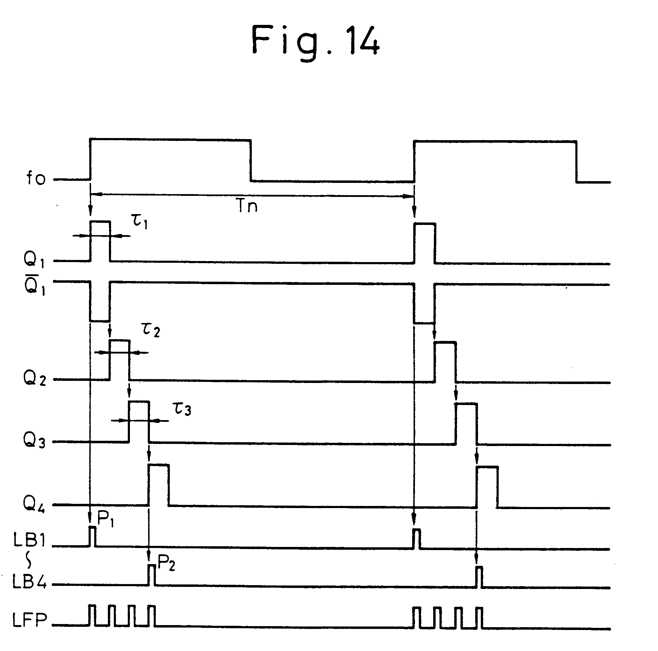

A circuit diagram of the Q-switch control system 10 is shown in Figure 13, and a functional time chart of the control signals is shown in Figure 14.

As shown in Figure 13, the circuit of the Q-switch control system consists of a Pulse generator PG for determining a frequency f₀ of the pulse group, and one-shot multivibrators OM₁ to OM₄ for determining the pulse intervals τ₁ to τ₃ in the pulse group. As shown in Figure 14, OM₁ to OM₄ are synchronous with leading edges of the respective input signals thereof.

Namely, the output signal f₀ from the pulse generator PG is supplied to the clock CK₁ of OM₁ , whereby a pulse Q₁ of the pulse interval τ₁ set at the OM₁ synchronously with the leading edge of the output signal f₀ is generated, and simultaneously, a signal Q, having an opposite polarity to that of the pulse Q₁ is delivered and supplied to the clock CK₂ of OM₂; the pulses Q₂ and Q̅₂̅ are produced in the same way. This also holds true for OM₃ and OM₄.

As described above, the frequency f₀ of the pulse group for dulling is set by PG, and a group of pulses with a predetermined time delay therebetween is generated synchronously with the first signal, and the above pulses Q₁ to Q₄ control a generated signal of the high frequency signal source RF in the Q-switches QS₁ to QS₂ , to thereby effect a control of the Q-switches for the laser beams LB₁ to LB₄.

A roll was dulled by controlling the pulse waveforms of four Q-switched laser beams by the method of the present invention. The waveform controlling conditions of the Q-switched laser pulse beam were as follows:

| | |
|---|---|
| τ₁ to τ₃: | 5 »s |
| LB₁ - LB₄: | 2 kW |
| f₀: | 20 kHz |
| FL: | 25 mm |
| RF output: | 40% |

The results of the dulling were a bore diameter of 100 »m and a roughness of 5 »m. The transfer to the steel plate was as high as 80% and the abrasion resistance was also improved.

With this embodiment, since a peak value can be set for each pulse of a pulse group, the fusing and evaporation during the process of dulling an object to be worked in the drilling process for roughening the surface of the object can be effectively controlled and craters having suitable shape and hardness can be formed. (For example, with this embodiment, a height of a concavity of a crater of more than 5 »m can be constantly formed.)

Also, since the pulse interval in the pulse group can be controlled, a drilling suitable for dulling can be conducted. Namely, the present invention is very effective for use in roll dulling.

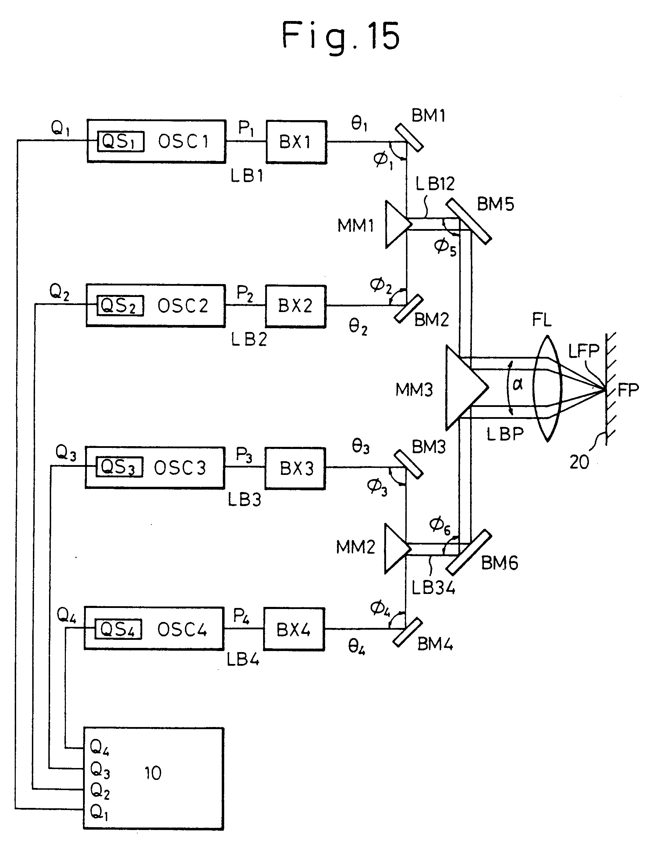

With reference to Figure 15, in a second embodiment of the apparatus of the invention, a respective beam pulse expander BX is set between each laser oscillator OSC and the respective bending mirror BM and therefore, in addition to the effect of the previous embodiment, the diameters of the laser beams (the product beam diameter D and the divergence angle ϑ is constant) are enlarged, respectively.

Figure 15 shows the basic construction of the pulse laser controller using four pulses, wherein OSC₁ to OSC₄ indicate respective laser oscillators, and QS₁ to QS₄ indicate respective Q-switches, corresponding to the oscillators OSC₁ to OSC₄, respectively. Reference numeral 10 indicates a Q-switch control system which delivers Q-switching signals Q₁ to Q₄, and laser beams LB₁ to LB₄ are generated from the oscillators OSC₁ to OSC₄. The laser beams LB₁ to LB₄ have diameters enlarged, respectively, by the beam pulse expanders BX₁ to BX₄ so that the laser beams LB₁ to LB₄ have divergence angles of ϑ₁ to ϑ₄. These laser beams LB₁ to LB₄ are merged into a single laser beam group LBP by bending mirrors BM₁ to BM₆ and combining mirrors MM₁ to MM₃.

The laser beam group LBP is focused at a focusing point FP₀ by a focusing lens FL into a focused laser beam group LFP, as in the focusing of a single laser beam. Reference numeral 20 indicates the surface of a roll to be dulled.

The focused diameters d₁ to d₄ of laser beam LB₁ to LB₄ of the focused laser beam group LFP are the products of beam divergence angles ϑ₁ to ϑ₄ and the focal length fℓ of the focusing lens FL, respectively, as follows:

$\text{d₁ = fℓ x ϑ₁ , d₂ = fℓ x ϑ₂ ,}$
$\text{d₃ = fℓ x ϑ₃ , d₄ = fℓ x ϑ₄}$

These focused beam diameters d₁ to d₄ and set peak values can be used to determine the hole diameter and depth worked by the respective laser beams.

As shown in Figure 15, by controlling the beam angles φ₁ to φ₆ at the bending mirrors BM₁ to BM₆ according to the angle defined by the reflecting plane defined by the pair of merging mirrors, the laser beams in the merged beam group LBP can be made parallel to each other with the angle α defined between the beams in the beam group LBP being zero degree, or not parallel to each other with the angle α being limited.

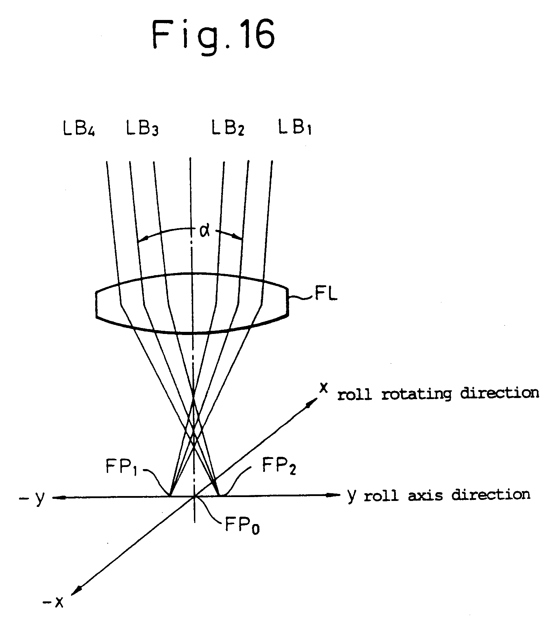

Namely, as shown in Fig. 15, the laser beams LB₁ and LB₂ , and LB₃ and LB₄ are made incident on the bending mirrors BM₅ and BM₆ as the parallel beams LB₁₂ and LB₃₄ , respectively, and then as shown in Figure 16, the angle α formed between the merged beams is made α ≠ 0° by controlling the beams angles φ₅ and φ₆ at the above bending mirrors BM₅ and BM₆.

Therefore, the focusing points of the parallel beams LB_{1,2} and LB_{3,4} are displaced to FP₁ and FP₂ , respectively, from point FP₀ (this point is suitable as the focal position at which the laser beam LB is made incident straight into the lens FL in embodiment 1.) where all the laser beams are parallel to one another. In the drawing, X and -X indicate a roll rotating direction and Y and -Y indicate a roll axial direction.

Figure 15 shows the embodiment in which four laser beams are used, but the number of laser beams is not limited thereto and may be more or less. If the number of laser beams is increased, the depth of the hole worked is nearly linearly increased, and holes having a different diameter from one another can be formed according to the number of laser beams. Therefore, the number of laser beams is selected according to the required surface roughness of a roll to be dulled.

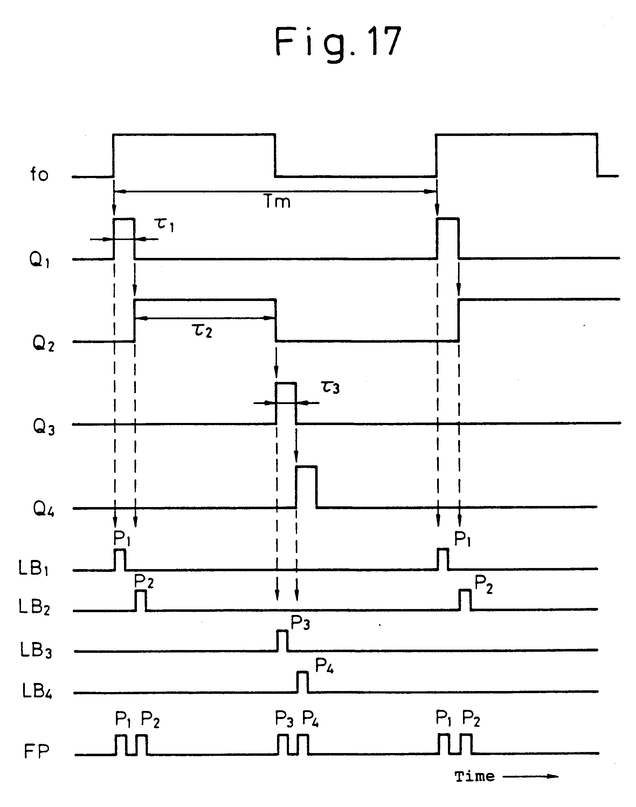

Figure 17 shows a functional time chart of the control signals of Figure 16. In Figures 16 and 17, one dulling is effected by the laser beams LB₁ and LB₂ , and the other dulling is effected by the laser beams LB₃ and LB₄. Namely, to make the pulsed laser incident on the surface of the rotating roll, the Q-switching control signal Q₁ is made closer to Q₂ and Q₃ is made closer to Q₄ , and thus the Q-switch control time delays τ₁ and τ₃ are shortened and therefore, a dulling effect is doubled. Also, a space between the pulsed laser beams LB_{1,2} and LB_{3,4} can be set at τ₂ , and thus a space of a crater at a dulling is determined. This embodiment can operate at double the dulling speed of the first embodiment by using τ₂ in about half of the dulling period thereof.

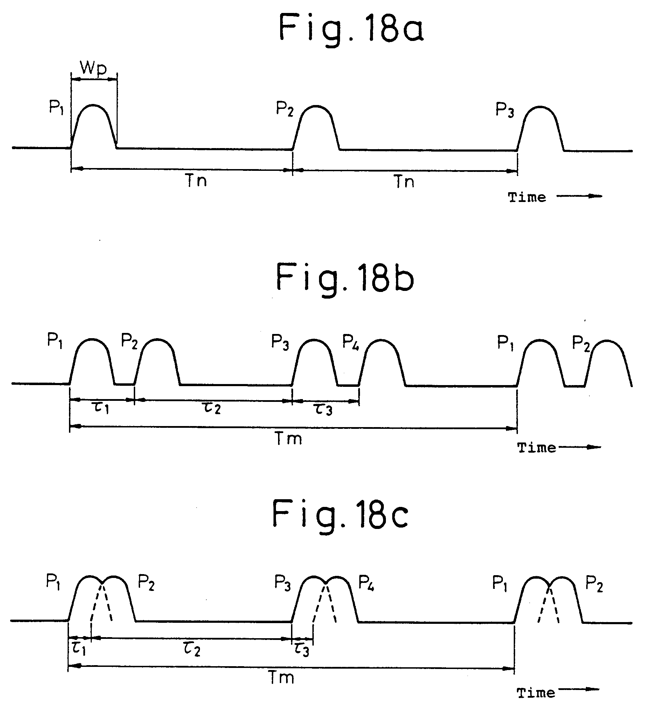

Figures 18a, 18b, and 18c show the generation of the pulse beam group, wherein Figure 18a shows a pulse train from one Q-switched laser and Figures 18b and 18c show the pulse trains of this embodiment, respectively, which are generated by the control signal shown in Figure 17. Figure 18c shows the pulse train when OM₁ and OM₃ are set at a shorter time than the width Wₚ of the pulse laser.

The pulse beams of four Q-switched lasers are controlled according to this second embodiment to dull the surface under the following conditions:

| | |
|---|---|
| LB₁ - LB₄: | 2 kW |
| f₀: | 20 kHz |
| Tₘ: | 50 »s |
| τ₁ , τ₃ , τ₄: | 2 »s |
| τ₂: | 23 »s |
| FL: | 25 mm |
| FP₁ , FP₂: | 50 »m |
| ϑ₁ , ϑ₂: | 3 mrad |
| ϑ₃ , ϑ₄: | 2 mrad |
| Roll diameter: | 500 mm |
| Roll speed: | 300 to 500 rpm |
| RF output: | 40% |

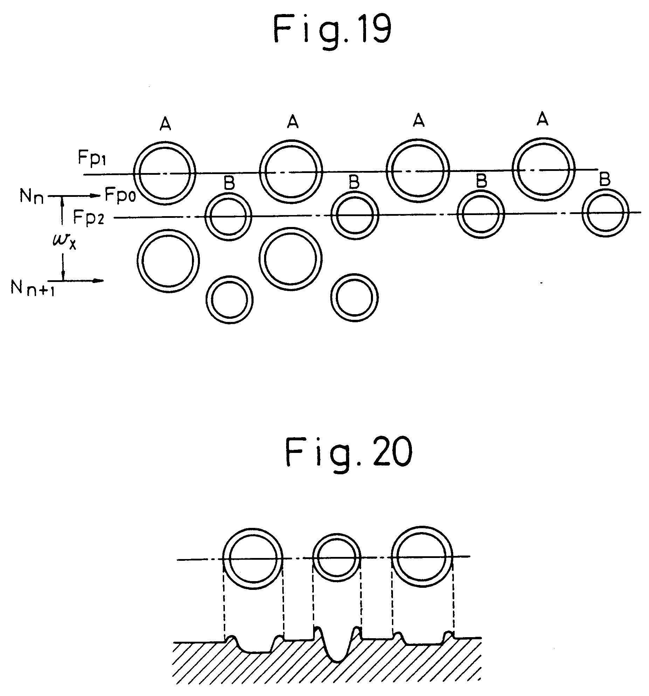

In the above dulling, large and small holes 120 and 80 »m in inside diameter were formed in the pattern shown in Figure 19, and had the sectional shapes as shown in Figure 20. The dulling was made with a roughness of 3.5 »m and the transfer to the steel sheet was 80%, which provided an improved abrasion resistance of the roll.

In Figure 19, when dulling the surface of a roll, Wₓ shows the space between the n number of trains : Nₙ and the n+1 number of trains : Nₙ₊₁ when one of the trains of uneven dulling is formed by rotating a roll.

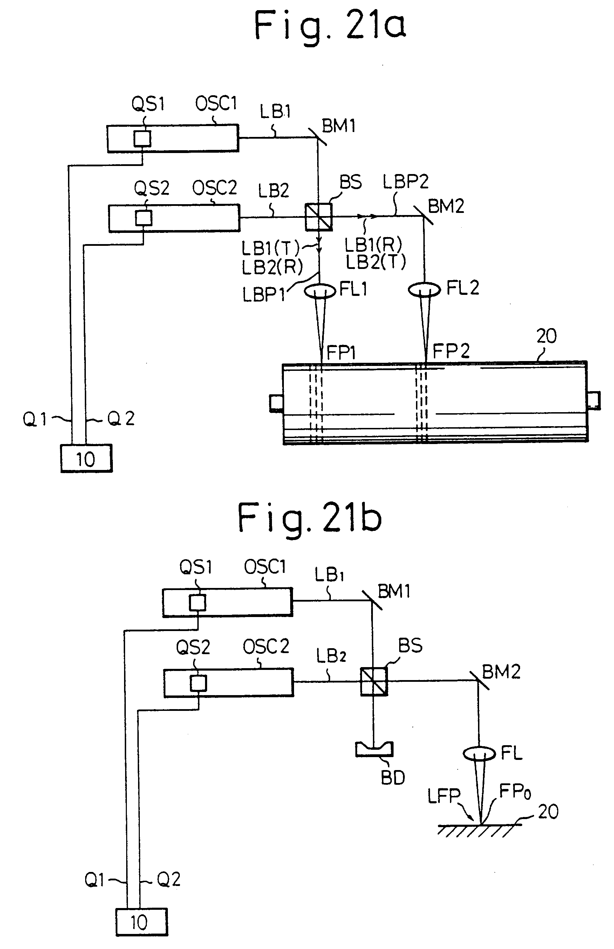

In a third embodiment, shown in Figures 21a and 21b, a beam splitter BS is used instead of the mirror TM of the first embodiment, and coaxially merges the pulse laser beam group.

The "beam splitter" referred to herein is an optical element used to separate a light beam of a predetermined wavelength, when incident at an inherent angle, into a reflected light beam (T) and a transmitting light beam (R). Normally, such an optical element has a structure in which several kinds of substances having different refraction factors are laminated on a base layer of a silica or the like and, due to the characteristics of the laminated structure, the reflected light beam (T) and the transmitting light beam (R) can be polarized simultaneously, as required. In this case, the transmitting light beam (R) of LB₁ is a polarized component (P_{wave}) parallel to the incident plane of LB₁ , and the reflected light beam (T) of LB₂ is a horizontal polarized component (S_{wave}).

Figure 21a shows the basic construction of the pulse laser controller using two pulses according to this embodiment, wherein OSC₁ and OSC₂ indicate laser oscillators, respectively, and QS₁ and QS₂ indicate Q-switches, respectively, corresponding to the laser oscillators OSC₁ and OSC₂ , respectively. Reference numeral 10 indicates a Q-switching control system which delivers Q-switched signals Q₁ and Q₂ sequentially, and laser beams LB₁ and LB₂ are generated from the laser oscillators OSC₁ and OSC₂ correspondingly. The laser beam LB₂ is supplied directly and LB₁ is supplied through a bending mirror BM₁ to the beam splitter BS, so that a transmitted beam LB₁ (T) of the laser beam LB₁ and the reflected beam LB₂ (R) of the LB₂ are merged into a group LBP₁ of coaxial laser beams.

On the other hand, the transmitted beam LB (T) of LB₂ and reflected beam LB₁ (R) are merged in another direction of the beam splitter BS into a group of coaxial laser beams LBP₂.

The laser beam groups LBP₁ and LBP₂ are focused by focusing lenses FL₁ and FL₂ , respectively, and at the focusing points FP₁ and FP₂ , are focused as laser beam groups LBP₁ and LBP₂ into a single laser beam, thereby permitting a rapid two-divisional dulling of the roll surface.

As shown in Figure 21(b), only the laser beam group LBP₂ merged by the beam splitter is used, and the other laser beam group LBP₂ is not used but is absorbed by a beam damper BD. In this case, the dulling speed is half that of the arrangement shown in Figure 21(a).

Reference numeral 20 indicates the surface of a roll to be dulled. With the two laser beams, the depth of the hole is nearly double and a number of laser beams is selected according to the required quality of the surface roughness of a roll to be dulled.

When the dividing function of the beam splitter by polarization is used and the laser beams LB₁ and LB₂ have 50% P and S waves, respectively, as random-polarized, the relationship $\text{PL₁ = PL₂}$ can be obtained by equalizing the powers of the laser beams LB₁ and LB₂ and using the inherent incident angle of the beam splitter (as an incident angle providing a complete separation between P and S component waves).

When the laser beams LB₁ and LB₂ are not completely random-polarized and the P and S waves cannot be separated at 50% the relationship $\text{PL₁ = PL₂}$ can be obtained by adjusting the powers of the laser beams LB₁ and LB₂ to the separation ratio between the P and S waves.

In this embodiment, as in the first embodiment, the frequency f₀ of the pulse group for dulling the roll surface is set at the pulse generator PG and a group of pulses having a predetermined time delay therebetween is generated synchronously with the first signal of the frequency, whereby LB₁ and LB₂ can be controlled by Q-switching. By nulling the pulse separations τ₁, both pulses also can be projected simultaneously.

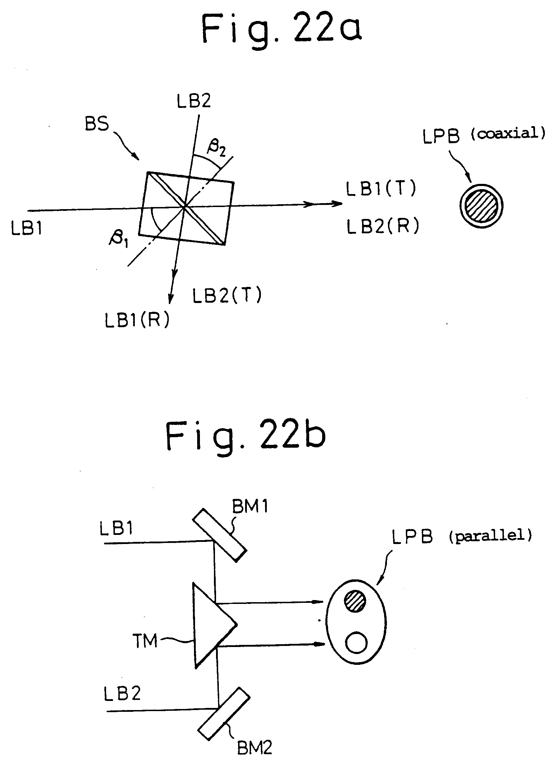

Figures 22a and 22b show the merging of laser beams, wherein Figure 22a shows a laser beam being merged by the beam splitter in which, by setting the incident angles B₁ and B₂ of the input lasr beams LB₁ and LB₂ to the same value within the inherent incident angle of the beam splitter BS, the P wave of LB₁ and S wave of LB₂ can be merged into a coaxial beam LBP, and Figure 22b shows a laser beam being merged by the combining mirror TM as in the first embodiment. In this case, the input laser beams LB₁ and LB₂ can be merged into parallel but not coaxial beams, and therefore, the diameter of the merged beam LBP is enlarged.

Note that this working by laser beams is not limited to the surface of a roll, but can be applied to any workpiece. The kinds of laser used in this dulling are solid laser such as YAG, ruby lasers, etc.

The pulse waveforms of the two Q-switched lasers were controlled by this embodiment to dull the surface of a roll, and the Q-switched laser pulse waveforms were controlled under the following conditions;

| | | |
|---|---|---|
| Beam splitter: | | 650.8 mm in diameter |
| Laser beam | τ₀: | 300 nsec |
| | τ₁: | 5 » sec |
| | f₀: | 20 kHz |
| Lens focal length FL: | | 25 mm |
| Roll shape, | length: | 1500 mm |
| | diameter: | 600 mm |
| Rf, output: | | 40% |
| Work time: | | about 1 hour |

The results were as follows:
The work time was about 1 hour, which obtained the same effect as obtained using two examples of the first embodiment, the inside diameter of the hole formed by dulling was 100 »m and the roughness was 2.2 »m, the transfer to the surface of a steel sheet was as high as 80%, and the abrasion resistance was improved.

According to this embodiment, as above-mentioned, the pulse laser beams can be merged coaxially, so that the focusing system using a lens can be made compact and simple and the positioning at the focusing point simplified. Since peak values can be set for individual pulses in the pulse group, it is possible to control the fusing and evaporation of the material from the hole being made in the dulling process, thereby permitting holes of an appropriate hardness to be formed. Further, since the separation of one pulse group from another can be controlled, crater formation or drilling further suitable for dulling can be effectively carried out.

According to the invention, it is possible to control the Q-switched pulse waveform of the continuous excitation solid laser to a condition desired for the roll dulling, and to set a convergent beam diameter, a peak value, irradiation time and irradiated state, etc., of each pulse in the pulse group, and therefore fusing and evaporation of an irradiated article can be controlled. Accordingly, a crater of a proper hardness can be formed and the shape and position of the crater can be controlled, with the result that it is possible to obtain an arrangement of the crater which is suitable for dulling.

| TABLE OF REFERENCE NUMERALS AND SYMBOLS | |
|---|---|
| 1: | Laser rod |
| 2: | Q-switched element |
| 3, 4: | Reflecting mirror |
| 5: | Radio frequency signal source |
| 6: | Diffraction light |
| 7: | Resonator |
| 10: | Q-switched control system |
| 11: | Crater |
| 12: | Thermally affected zone |
| OSC₁ to OSC₄: | Laser Cavities |
| QS₁ to QS₄: | Q-switches |
| Q₁ to Q₄: | Q-switched signals |
| LB₁ to LB₄ , LB₁₂ , LB₃₄ , LBP, LFP: | Laser beam |
| BX₁ to BX₄: | Beam expanders |
| ϑ₁ to ϑ₄: | Divergence angles |
| M₁ to M₇ , BM₁ to BM₆: | Bending mirror |
| FL: | Focusing lens |
| FP, FP₀ , FP₁ , FP₂: | Focusing point |
| 20: | Surface of a roll to be dulled |
| d₁ to d₄: | Focused beam diameters |
| fℓ: | Focal length |
| α: | Combination beam angle |
| f₀: | Frequency |
| PG: | Pulse generator |
| τ₁ to τ₃: | Pulse intervals |
| OM₁ to OM₄: | One-shot multivibrators |
| P₁ to P₄: | Laser pulse |
| Wₚ: | Laser pulse width |
| TM₁ to TM₃ , MM₁ to MM₃: | Combination mirrors |
| BS: | Beam splitter |

## Claims

1. Apparatus for roll-dulling by a pulsed laser beam, the apparatus comprising:
- a plurality of pulse laser oscillators (OSC1-OSC4), each comprising a laser resonator, a Q-switching element (2), and a radio frequency signal source (5), for generating respective pulsed laser beams (LB1-LB4) by Q-switching; and
- a Q-switch control system (10) arranged for determining the output power of said radio-frequency signal sources, said Q-switch control system comprising a pulse oscillator (PG) for determining a pulse group repetition rate (f₀), and a plurality of one-shot multi-vibrators (OM1-OM4) triggered by said pulse oscillator (PG) for establishing a time delay in the output power of said plurality of pulse laser oscillators (OSC1-OSC4); whereby said Q-switch control system (10) controls said plurality of radio-frequency signal sources so that said plurality of laser oscillators (OSC1-OSC4) are Q-switched by the signals (RF) from the radio-frequency sources to generate a pulse group at a frequency (f₀) with a predetermined time delay between each pulse, and the pulsed laser beams are directed to at least one working point.

2. Apparatus as claimed in Claim 1, characterised in that respective laser beam expanders (BX1-BX4) are provided between the laser oscillators (OSC1-OSC4) and respective mirrors (BM1-BM4) which focus the enlarged laser beams (LB1-LB4) from the beam expanders into a parallel or nonparallel laser beam group (LBP).

3. Apparatus as claimed in Claim 1, characterised in that it includes a beam splitter (BS) which receives the laser beams (LB1, LB2) from at least two of the laser oscillators (OSC1, OSC2), the beam splitter (BS) separating each beam into two components (LB₁(T), LB₂(R); LB₁(R), LB₂(T)) and then merging the beam components coaxially into respective laser beam groups (LBP₁, LBP₂).

## Patentansprüche

1. Einrichtung zum Mattieren von Rollen mittels eines gepulsten Laserstrahls, wobei die Einrichtung umfaßt:
- mehrere Impulslaser-Oszillatoren (OSC1-OSC4), wovon jeder einen Laserresonator, ein Güteschaltungselement (2) sowie eine Hochfrequenzsignal-Quelle (5) umfaßt, um durch Betreiben in Güteschaltung entsprechende gepulste Laserstrahlen (LB1-LB4) zu erzeugen; und
- ein Güteschaltung-Steuersystem (10), das so beschaffen ist, daß es die Ausgangsleistung der Hochfrequenzsignal-Quellen bestimmt und versehen ist mit einem Impulsoszillator (PG) für die Bestimmung einer Impulsgruppen-Folgefrequenz (f₀) und mehreren monostabilen Kippschaltungen (OM1-OM4), die durch den Impulsoszillator (PG) getriggert werden, um in der Ausgangsleistung der mehreren Impulslaser-Oszillatoren (OSC1-OSC4) eine Zeitverzögerung herzustellen; wobei das Güteschaltung-Steuersystem (10) die mehreren Hochfrequenzsignal-Quellen so steuert, daß die mehreren Laseroszillatoren (OSC1-OSC4) durch die Signale (RF) von den Hochfrequenz-Quellen in Güteschaltung betrieben werden, um eine Impulsgruppe mit einer Frequenz (f₀) und mit vorgegebener Zeitverzögerung zwischen jedem Impuls zu erzeugen, und wobei die gepulsten Laserstrahlen auf wenigstens einen Arbeitspunkt gerichtet werden.

2. Einrichtung gemäß Anspruch 1, dadurch gekennzeichnet, daß entsprechende Laserstrahl-Erweiterungseinrichtungen (BX1-BX4) zwischen den Laseroszillatoren (OSC1-OSC4) und jeweiligen Spiegeln (BM1-BM4) vorgesehen sind, wobei die Spiegel (BM1-BM4) die verbreiterten Laserstrahlen (LB1-LB4) von den Strahl-Erweiterungseinrichtungen in eine parallele oder nicht parallele Laserstrahlgruppe (LBP) fokussieren.

3. Einrichtung gemaß Anspruch 1, dadurch gekennzeichnet, daß sie einen Strahlteiler (BS) enthält, der die Laserstrahlen (LB1, LB2) von wenigstens zwei der Laseroszillatoren (OSC1, OSC2) empfängt und jeden Strahl in zwei Komponenten (LB₁(T), LB₂(R); LB₁(R), LB₂(T)) zerlegt und dann die Strahlkomponenten koaxial zu entsprechenden Laserstrahlgruppen (LBP₁, LBP₂) mischt.

## Revendications

1. Appareil pour le matage de rouleaux par un faisceau laser à impulsions, l'appareil comprenant:
- plusieurs oscillateurs laser à impulsions (OSC1 - OSC4), comportant chacun un résonateur laser, un élément (2) de commutation du facteur de qualité et une source (5) de signal à fréquence radio, pour générer des faisceaux laser à impulsions respectifs (LB1 - LB4) par commutation du facteur de qualité; et
- un système de contrôle (10) de la commutation du facteur de qualité, agencé pour définir la puissance de sortie desdites sources de signal à fréquence radio, ledit système de contrôle de la commutation du facteur de qualité comportant un oscillateur à impulsions (PG) en vue de déterminer une fréquence de répétition (f₀) des groupes d'impulsions, et plusieurs multivibrateurs monostables (OM₁ - OM₄) activés par ledit oscillateur à impulsions (PG) en vue d'établir une temporisation dans la puissance de sortie desdits plusieurs oscillateurs laser à impulsions (OSC1 - OSC4); ledit système de contrôle (10) de la commutation du facteur de qualité contrôlant lesdites plusieurs sources de signal à fréquence radio, de telle sorte que lesdits plusieurs oscillateurs laser (OSC1 - OSC4) soient commutés en facteur de qualité par les signaux (FR) provenant des sources à fréquence radio, pour produire un groupe d'impulsions à une fréquence (f₀), avec une temporisation prédéterminée entre chaque impulsion, et les faisceaux laser à impulsions étant dirigés vers au moins un point de traitement.

2. Appareil selon la revendication 1, caractérisé en ce que des dispositifs respectifs d'expansion de faisceaux laser (BX1 - BX4) sont prévus entre les oscillateurs laser (OSC1 - OSC4) et des miroirs respectifs (BM1 - BM4) qui concentrent les faisceaux laser agrandis (LB1 - LB4) provenant des dispositifs d'expansion de faisceaux, en un groupe (LBP) de faisceaux laser parallèles ou non parallèles.

3. Appareil selon la revendication 1, caractérisé en ce qu'il comporte un diviseur de faisceau (BS) qui reçoit les faisceaux laser (LB1, LB2) d'au moins deux des oscillateurs laser (OSC1, OSC2) le diviseur de faisceau (BS) séparant chaque faisceau en deux composantes (LB1(T), LB2(R); LB1(R), LB2(T)), et rassemblant ensuite coaxialement les composantes de faisceau en des groupes respectifs (LBP1, LBP2) de faisceaux laser.
